# EUROPÄISCHE PATENTSCHRIFT

(11) **EP 4 052 872 B1**
(45) Veröffentlichungstag und Bekanntmachung des Hinweises auf die Patenterteilung: **27.12.2023**
(21) Anmeldenummer: 21160088.7
(22) Anmeldetag: 01.03.2021
(51) Int. Cl.: B26D 7/20, B26D 7/22, B26F 1/38, F16P 3/00, F16P 3/14

(54) **SCHNEIDMASCHINE MIT VERSENKBAREN SCHUTZSCHEIBEN**
CUTTING MACHINE WITH RETRACTABLE PROTECTIVE PLATES
MACHINE A DÉCOUPER AVEC VITRES DE PROTECTION RÉTRACTABLES

(43) Veröffentlichungstag der Anmeldung: 07.09.2022
(73) Patentinhaber: ZÜND SYSTEMTECHNIK AG, 9450 Altstätten (CH)
(72) Erfinder: Holzinger, Martin, CH-9450 Altstätten (CH); Jann, Simon, 9450 Altstätten (CH)
(74) Vertreter: Kaminski Harmann

(56) Entgegenhaltungen:
- EP-B1- 2 488 333
- WO-A1-01/48417
- DE-A1- 3 441 221
- US-A1- 2016 231 729

## Beschreibung

### GEBIET DER ERFINDUNG

Die vorliegende Erfindung betrifft eine Schneidemaschine zum Schneiden, Fräsen, Rillen, Perforieren oder Markieren von bedruckten Bögen aus Papier, Karton oder ähnlichen Materialien von Kunststofffolien, von Tüchern oder Ähnlichem. Desweiteren können Verbundplatten bedruckt oder auch nicht bedruckt aus Holz, Papier, Karton, Aluminium, Kunststoffen oder Schaumstoffe oder ähnlichem mit der Schneidemaschine bearbeitet werden.

### HINTERGRUND DER ERFINDUNG

Schneidmaschinen zum Schneiden, Fräsen, Rillen, Perforieren oder Markieren von bedruckten Bögen aus Papier, Karton oder ähnlichen Materialien von Kunststofffolien, von Tüchern oder Ähnlichem sind beispielsweise in den Dokumenten EP 1 385 674 B1 und EP 2 488 333 B1 beschrieben. Eine solche Schneidemaschine weist eine Arbeitsfläche auf, die zur Aufnahme mindestens eines Objekts ausgestaltet ist, sowie eine beweglich über der Arbeitsfläche angeordnete Arbeitsgruppe mit einem Messer oder einer anderen Schneidevorrichtung zum Schneiden von auf der Arbeitsfläche befindlichen Objekten. Unter "Schneiden" ist nicht unbedingt ein vollständiges Durchtrennen zu verstehen, sodass ein Schneideprozess ebenso ein Perforieren oder Falzen des Objekts oder einen ähnlichen Arbeitsschritt beinhalten kann, der mit einer gattungsgemässen Maschine ausführbar ist.

Um Unfälle vorzubeugen, werden Schneidemaschinen mit Schutzmechanismen ausgestattet, die einen sicheren Betrieb garantieren sollen. Schutzmechanismen sind insbesondere bei Schneidemaschinen mit Geschwindigkeiten von über einem Meter pro Sekunde und Beschleunigungen von über 10 m/s² notwendig, sowie bei Schneidemaschinen mit hohem Materialdurchlass von über 65 mm. Beispielsweise werden im Stand der Technik Lichtvorhänge nahe einer Schneidemaschine positioniert, wodurch auch der Platzbedarf der Schneidemaschine steigt. Im dem Fall, dass der Lichtvorhang unterbrochen wird - beispielsweise durch einen Menschen, der sich der im Betrieb befindenden Schneidemaschine zu sehr nähert - wird der Betrieb der Schneidemaschine unterbrochen. Ebenfalls werden Laserscanner oder Ultraschallsensoren als Schutzmechanismus im Stand der Technik verwendet. Sowohl in der Nähe der Schneidemaschine positionierte Lichtvorhänge als auch Laserscanner oder Ultraschallsensoren haben den Nachteil, dass Unterbrechungen des Schneideprozess häufig vorkommen - sei es z.B. aufgrund Unwissens bzw. nicht Beachtens dieser Schutzmechanismen durch Menschen.

Es stellt sich somit die Aufgabe, eine Schneidemaschine mit einem verbesserten Schutzmechanismus bereitzustellen.

### ZUSAMMENFASSUNG DER ERFINDUNG

Die vorliegende Erfindung betrifft eine Schneidemaschine, aufweisend 1) einen Tisch mit einer ebenen Arbeitsfläche, welche in einer Arbeitsflächeebene liegt, die Arbeitsfläche ausgestaltet zur Aufnahme eines zu schneidenden Objekts, 2) eine Lichtvorhangvorrichtung sowie eine Schutzscheibe, wobei die Lichtvorhangvorrichtung zur Erzeugung eines Lichtvorhangs ausgebildet ist, 3) einen Querbalken, angeordnet oberhalb der Arbeitsfläche, gelagert am Tisch, und ausgestaltet zur linearen Positionierbarkeit parallel zu einer ersten Horizontalachse, 4) ein Modul, insbesondere zur Aufnahme von Werkzeugen, gelagert am Querbalken und ausgestaltet zur linearen Positionierbarkeit parallel zu einer zweiten Horizontalachse, wobei die zweite Horizontalachse rechtwinklig zur ersten Horizontalachse verläuft, und 5) eine Steuerungseinheit ausgebildet zum Steuern der Schneidemaschine. Die erfindungsgemässe Schneidemaschine verfügt über zwei Betriebszustände, wobei in einem ersten Betriebszustand die Schutzscheibe an einer Seite des Tisches unterhalb der Arbeitsflächeebene ist, und wobei in einem zweiten Betriebszustand sowohl die Schutzscheibe als auch der von der Lichtvorhangvorrichtung erzeugbare Lichtvorhang an der Seite des Tisches zumindest teilweise oberhalb der Arbeitsflächeebene sind, wobei sich im zweiten Betriebszustand der Lichtvorhang zumindest teilweise oberhalb der Schutzscheibe befindet.

Der im zweiten Betriebszustand vorliegende kombinierte Schutzmechanismus durch Schutzscheibe und Lichtvorhang bietet auch den Vorteil, dass sich während des Schneideprozesses lösende Teile zumindest teilweise daran gehindert wird, die Schneidemaschine zu verlassen. Eine transparente Schutzscheibe erlaubt darüber hinaus auch eine visuelle Überprüfung des Schneideprozesses, beispielsweise durch einen Menschen oder aber eine ausserhalb der Schneidemaschine positionierte Kamera.

Da sich im zweiten Betriebszustand der Lichtvorhang zumindest teilweise oberhalb der Schutzscheibe befindet, kann der Lichtvorhang - verglichen mit dem Stand der Technik - näher an der Schneidemaschine positioniert werden, da z.B. die Zeit, die ein Mensch nach Durchqueren des Lichtvorhangs benötigt, um in einen Gefahrenbereich der Schneidemaschine zu gelangen, im Fall der erfindungsgemässen Schneidemaschine im zweiten Betriebszustand grösser ist als die Zeit, die im Fall eines nach dem Stand der Technik positionierten Lichtvorhangs benötigt wird. Der im Vergleich zum Stand der Technik höher gelegene Lichtvorhang wird auch seltener unbeabsichtigt von einem Nutzer unterbrochen, wodurch unbeabsichtigte Unterbrechungen des Schneideprozesses seltener sind.

Da sich während des Schneideprozesses eventuell lösende Teile auch häufig von der Schutzscheibe zurückgehalten werden, kann der Lichtvorhang - verglichen mit dem Stand der Technik - näher an der Schneidemaschine positioniert werden, da die Schutzscheibe sich eventuell lösende Teile zurückhält, wodurch diese den Lichtvorhang nicht unterbrechen. Sich lösende Teile verlassen die Schneidemaschine überwiegend in Höhe der Schutzscheibe. Ein höher angebrachter Lichtvorhang wird deshalb üblicherweise nicht häufig durch sich lösende Teile unterbrochen. Die Schutzscheibe kann auch zu einer Reduktion des durch die Schneidemaschine bewirkten Lärmpegels ausserhalb der Schneidemaschine beitragen. Die erfindungsgemässe Schneidemaschine weist daher einen im Vergleich zum Stand der Technik kompakteren Schutzmechanismus auf, der darüber hinaus zu selteneren Unterbrechungen des Schneideprozesses führt.

In einer Ausführungsform der Schneidemaschine befindet sich im ersten Betriebszustand der von der Lichtvorhangvorrichtung erzeugbare Lichtvorhang an der Seite des Tisches zumindest teilweise oberhalb der Arbeitsflächeebene.

Im ersten Betriebszustand kann z.B. überprüft werden, ob Hindernisse einer Überführung der Schneidemaschine in den zweiten Betriebszustand im Wege stehen. Dadurch wird ein sicherer Wechsel vom ersten Betriebszustand in den zweiten Betriebszustand ermöglicht. Im zweiten Betriebszustand liegt ein kombinierter Schutzmechanismus bestehend aus Schutzscheibe und Lichtvorhang vor.

In einer Ausführungsform der Schneidemaschine reicht im ersten Betriebszustand der Lichtvorhang im Wesentlichen nahtlos bis zur Arbeitsflächeebene, und im zweiten Betriebszustand reicht der Lichtvorhang im Wesentlichen nahtlos bis zur Schutzscheibe, wobei die Schutzscheibe und der Lichtvorhang in einer zur Arbeitsflächeebene orthogonalen Richtung eine Schutzscheibenausdehnung bzw. eine Lichtvorhangausdehnung aufweisen, wobei die Schutzscheibenausdehnung grösser, insbesondere doppelt so gross, ist als die Lichtvorhangausdehnung.

Ein nahtloser Übergang vom Lichtvorhang zur Arbeitsfläche im ersten Betriebszustand bzw. vom Lichtvorhang zur Schutzscheibe verbessert den Schutzmechanismus, da nicht überwachte Bereiche, die z.B. leicht von einem Menschen durchquert werden können, hiermit reduziert werden. Eine im Vergleich zur Lichtvorhangausdehnung grosse Schutzscheibenausdehnung ist vorteilhaft, da es so seltener zu Unterbrechungen des Schneideprozesses kommt, da die Schutzscheibe ein Eindringen z.B. eines Nutzers in einen Gefahrenbereich der Schneidemaschine physisch unterbindet.

In einer weiteren Ausführungsform der Schneidemaschine weist die Lichtvorhangvorrichtung zwei Lichtvorhangsäulen auf.

In einer weiteren Ausführungsform der Schneidemaschine weist die Schneidemaschine eine an der Seite des Tisches angebrachte Seitenabdeckung auf, die ein Seitenvolumen umgibt, wobei die Schutzscheibe im ersten Betriebszustand im Seitenvolumen ist.

In einer weiteren Ausführungsform der Schneidemaschine weist die Schneidemaschine ein Verfahrmodul auf, welches insbesondere als Linearmotor oder als Pneumatik-Motor ausgebildet ist und insbesondere im Seitenvolumen angebracht ist, wobei das Verfahrmodul dazu eingerichtet ist, die Lichtvorhangvorrichtung sowie die Schutzscheibe zu verfahren, und wobei die Steuerungseinheit dazu ausgebildet ist, durch Steuerung des Verfahrmoduls die Schneidemaschine in einen der zwei Betriebszustände zu versetzen.

In einer weiteren Ausführungsform der Schneidemaschine verfügt die Schneidemaschine über einen Beladezustand, in dem sowohl die Schutzscheibe als auch die Lichtvorhangvorrichtung unterhalb der Arbeitsflächeebene sind, insbesondere im Seitenvolumen. In dieser Ausführungsform ist die Steuerungseinheit dazu ausgebildet, durch Steuerung des Verfahrmoduls die Schneidemaschine in den Beladezustand zu versetzen.

Die Seitenabdeckung kann damit ein Beschädigen der Schutzscheibe und der Lichtvorhangvorrichtung, z.B. der zwei Lichtvorhangsäulen, während des Beladens der Schneidemaschine mit einem zu schneidenden Objekt verhindern.

Im Beladezustand, in dem die Schneidemaschine beladen werden kann, sind dem Nutzer keine Erhöhungen bzw. Hindernisse im Weg. Im Beladezustand kann die Schneidemaschine daher leicht ein zu schneidendes Objekt aufnehmen. Die Schneidemaschine kann aus dem Beladezustand zuerst in den ersten Betriebszustand und dann in den zweiten Betriebszustand wechseln.

In einer weiteren Ausführungsform der Schneidemaschine steuert die Steuerungseinheit das Verfahrmodul so, dass die Lichtvorhangvorrichtung und die Schutzscheibe gleichzeitig in einen der zwei Betriebszustände oder in den Beladezustand verfahren werden.

In einer weiteren Ausführungsform der Schneidemaschine sind die Schutzscheibe und die Lichtvorhangvorrichtung nicht fest verbunden, und das gleichzeitige Verfahren wird mit einer Übersetzung erreicht.

In einer weiteren Ausführungsform der Schneidemaschine steuert die Steuerungseinheit das Verfahrmodul so, dass die Lichtvorhangvorrichtung und die Schutzscheibe unabhängig voneinander in einen der zwei Betriebszustände oder in den Beladezustand verfahren werden.

In einer weiteren Ausführungsform weist die Schneidemaschine einen Rahmen sowie einen ersten und einen zweiten Pneumatik-Motor auf, wobei die Lichtvorhangvorrichtung und die Schutzscheibe mit dem Rahmen verbunden sind und wobei der erste Pneumatik-Motor dazu eingerichtet ist, den Rahmen zu verfahren, wobei das Verfahren des Rahmens durch den ersten Pneumatik-Motor ein gemeinsames Verfahren der Lichtvorhangvorrichtung und der Schutzscheibe bewirkt, und wobei der zweite Pneumatik-Motor dazu eingerichtet ist, die Lichtvorhangvorrichtung relativ zum Rahmen zu verfahren, wobei der erste Pneumatik-Motor einen ersten und der zweite Pneumatik-Motor einen zweiten möglichen Verstellweg aufweist, und wobei der zweite mögliche Verstellweg insbesondere kürzer ist als der erste mögliche Verstellweg. Die Steuerungseinheit ist in dieser Ausführungsform dazu eingerichtet, den ersten und zweiten Pneumatik-Motor zu steuern.

Der zweite Pneumatik-Motor verfährt die Lichtvorhangvorrichtung relativ zum Rahmen und damit relativ zur Schutzscheibe. Der zweite Pneumatik-Motor ist in dieser Ausführungsform demnach dazu eingerichtet, nur die Lichtvorhangvorrichtung zu verfahren. Der erste Pneumatik-Motor verfährt wiederum den Rahmen und damit, da mit dem Rahmen verbunden, die Lichtvorhangvorrichtung und die Schutzscheibe. Insbesondere kann der erste Pneumatik-Motor damit die Lichtvorhangvorrichtung und die Schutzscheibe gleichzeitig und mit derselben Geschwindigkeit verfahren. Der zweite Pneumatik-Motor hat insbesondere einen kürzeren möglichen Verstellweg als der erste Pneumatik-Motor, d.h. der erste Pneumatik-Motor kann den Rahmen über eine grössere Distanz verfahren als der zweite Pneumatik-Motor die Lichtvorhangvorrichtung.

In dieser Ausführungsform ist die Steuerungseinheit dazu eingerichtet, durch Steuerung des ersten und zweiten Pneumatik-Motors die Schneidemaschine in den ersten oder zweiten Betriebszustand oder in den Beladezustand zu versetzen. Zum Versetzen der Schneidemaschine in den Beladezustand steuert die Steuerungseinheit insbesondere den ersten Pneumatik-Motor, wobei der Rahmen unter die Arbeitsflächeebene verfahren wird. Durch Steuerung des zweiten Pneumatik-Motors kann die Schneidemaschine aus dem Beladezustand in den ersten Betriebszustand versetzt werden. Durch Steuerung des ersten und zweiten Pneumatik-Motors durch die Steuerungseinheit kann die Schneidemaschine in den zweiten Betriebszustand versetzt werden.

In einer weiteren Ausführungsform der Schneidemaschine sichert eine Sperrklinke ein Verharren im zweiten Betriebszustand, und funktionale Sensorik, insbesondere ein Hall-Sensor und/oder eine Lichtschranke und/oder ein im Verfahrmodul angebrachter Positionszähler, überwacht ein Verharren im zweiten Betriebszustand.

Mit Hilfe einer Lichtschranke kann beispielsweise überprüft werden, ob die Lichtvorhangsäulen vollständig ausgefahren sind. Eine die Lichtschranke erzeugende Vorrichtung kann beispielsweise an bzw. in der Seitenabdeckung angebracht sein.

In einer weiteren Ausführungsform der Schneidemaschine ist das Verfahrmodul dazu eingerichtet, das Vorhandensein von über die Schwerkraft hinausgehenden Kräften, welche auf die Schutzscheibe wirken, zu erkennen, und das Verfahrmodul ist dazu eingerichtet, das Verfahren der Schutzscheibe und/oder der Lichtvorhangvorrichtung im Falle des Überschreitens einer vorgegeben Kraftschwelle durch die über die Schwerkraft hinausgehenden Kräfte zu unterbrechen.

In einer weiteren Ausführungsform der Schneidemaschine ist das Verfahrmodul dazu eingerichtet, die Schutzscheibe durch einen Längsschlitz in der Seitenabdeckung zu verfahren, und der Längsschlitz ist mit Abdeckbürsten und/oder Gummilippen verschlossen. Weiterhin kann auch die Lichtvorhangvorrichtung durch den Längsschlitz verfahren werden.

In einer weiteren Ausführungsform der Schneidemaschine weist die Schneidemaschine eine Vielzahl von Schutzscheiben und von Verfahrmodulen auf, wobei die Schutzscheiben in einer Schutzscheibenebene angeordnet sind und mit Führungen beim Verfahren durch die Verfahrmodule in der Schutzscheibenebene gehalten werden.

In einer weiteren Ausführungsform der Schneidemaschine steuert die Steuerungseinheit die Vielzahl von Verfahrmodulen so, dass die Vielzahl von Schutzscheiben gleichzeitig verfahren werden.

Alternativ können die Vielzahl von Schutzscheiben auch unabhängig voneinander verfahren werden.

In einer weiteren Ausführungsform der Schneidemaschine ist an einer weiteren Seite des Tisches, insbesondere der Seite des Tisches gegenüberliegend, eine weitere Seitenabdeckung angebracht, welche ein weiteres Seitenvolumen umgibt, wobei mindestens eine weitere Schutzscheibe, mindestens ein weiteres Verfahrmodul sowie zwei weitere Lichtvorhangsäulen mit der weiteren Seitenabdeckung korrespondieren, wobei die mindestens eine weitere Schutzscheibe und das mindestens eine weitere Verfahrmodul und die zwei weiteren Lichtvorhangsäulen durch die Steuerungseinheit gesteuert werden.

Alternativ können Schutzscheiben an drei bzw. an allen vier Seiten des Tisches angebracht werden. Alternativ können Schutzscheiben und/oder Lichtvorhangsäulen, die an zwei Seiten des Tisches angebracht sind, auch durch ein Verfahrmodul verfahren werden.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine schematische Darstellung einer Schneidemaschine gemäss dem Stand der Technik.
Figur 2 zeigt eine Schneidemaschine gemäss einer Ausführungsform der vorliegenden Erfindung in einem Beladezustand.
Figur 3 zeigt eine Schneidemaschine gemäss einer Ausführungsform der vorliegenden Erfindung in einem ersten Betriebszustand.
Figur 4 zeigt eine Schneidemaschine gemäss einer Ausführungsform der vorliegenden Erfindung in einem zweiten Betriebszustand.
Figur 5 zeigt ein Verfahrmodul zum Verfahren einer Lichtvorhangsäule und einer Schutzscheibe gemäss einer Ausführungsform der vorliegenden Erfindung.
Figur 6 zeigt eine Teilansicht einer Schneidemaschine gemäss einer Ausführungsform der vorliegenden Erfindung in einem zweiten Betriebszustand.

### DETAILLIERTE BESCHREIBUNG DER ZEICHNUNGEN

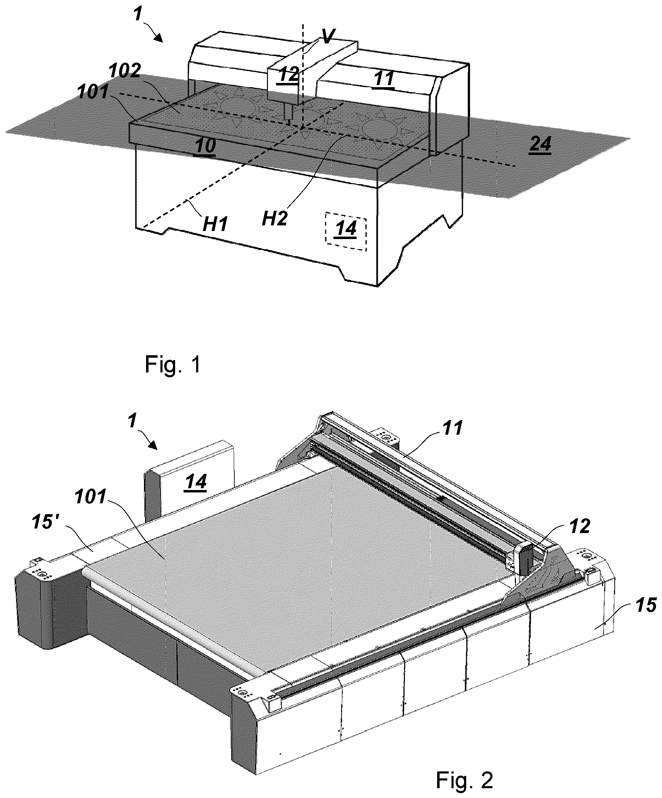

Figur 1 zeigt eine schematische Darstellung einer Schneidemaschine 1 gemäss dem Stand der Technik, aufweisend einen Tisch 10 mit einer Arbeitsfläche 101, welche in einer Arbeitsflächeebene 24 liegt. Die Arbeitsfläche ist zur Aufnahme eines zu schneidenden Objekts 102 ausgestaltet, in dem gezeigten Beispiel eine Kartonplatte mit auszuschneidenden Mustern.

Die Schneidemaschine 1 weist einen Querbalken 11 auf, welcher oberhalb der Arbeitsfläche angeordnet und so am Tisch gelagert ist, dass er zur linearen Positionierbarkeit parallel zu einer ersten Horizontalachse H1 ausgestaltet ist. Ein am Querbalken 11 gelagertes Modul 12 ist ausgestaltet zur linearen Positionierbarkeit parallel zu einer zweiten Horizontalachse H2, wobei die zweite Horizontalachse H2 rechtwinklig zur ersten Horizontalachse H1 verläuft. Die Schneidemaschine weist auch eine Steuerungseinheit 14 auf, welche zur Steuerung der Schneidemaschine 1 ausgebildet ist.

Figur 2 zeigt eine Ausführungsform einer Schneidemaschine 1 in einem Beladezustand. Wie in Figur 1 gezeigt, weist die Schneidemaschine 1 eine Arbeitsfläche 101 auf. Die Schneidemaschine 1 hat zwei Seitenabdeckungen 15,15', welche an gegenüberliegenden Seiten der Schneidemaschine 1 angebracht sind. Schutzscheiben und Lichtvorhangsäulen (nicht in Figur 2 gezeigt) befinden sich im von den zwei Seitenabdeckungen 15,15' umgebenen Seitenvolumen. Schutzscheiben und Lichtvorhangsäulen befinden sich unterhalb der Arbeitsflächeebene, in welcher die Arbeitsfläche 101 liegt. Ein zu schneidendes Objekt kann leicht im Beladezustand auf die Arbeitsfläche 101 gelegt werden.

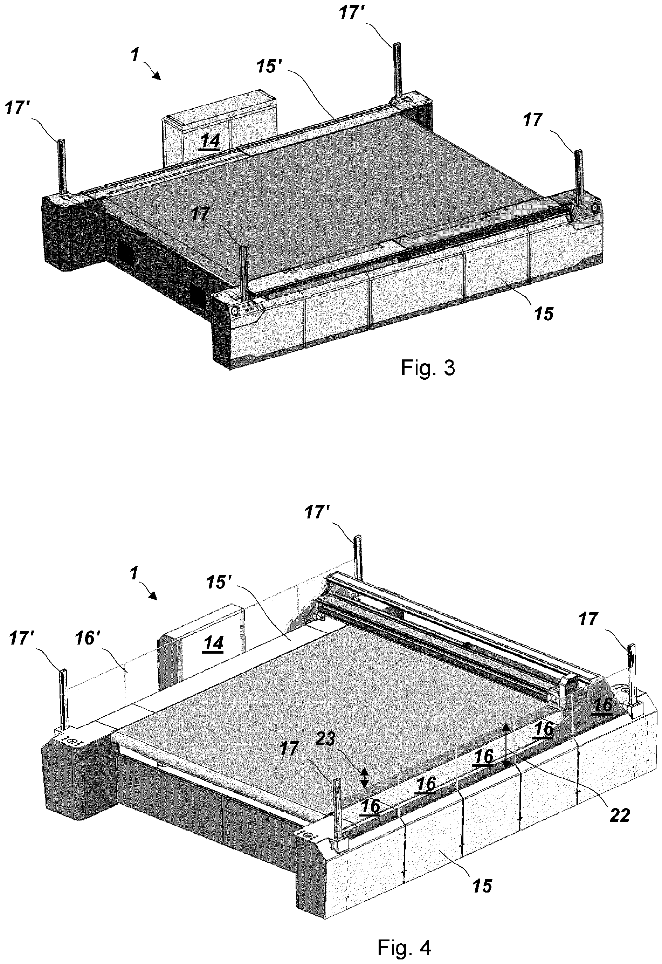

Figur 3 zeigt eine Figur 2 entsprechende Ausführungsform, wobei eine Schneidemaschine 1 in einem ersten Betriebszustand gezeigt wird. Im Unterschied zu Figur 2 sind vier Lichtvorhangsäulen 17,17' aus den Seitenvolumen, die von den Seitenabdeckungen 15,15' umgeben sind, ausgefahren, wobei je zwei Lichtvorhangsäulen aus jedem Seitenvolumen herausragen, d.h. zwei Lichtvorhangsäulen 17 auf einer Seite der Schneidemaschine 1, und zwei Lichtvorhangsäulen 17' auf einer weiteren Seite der Schneidemaschine 1. Die vier Lichtvorhangsäulen 17,17' befinden sich zumindest teilweise oberhalb der Arbeitsflächeebene 24.

Je zwei benachbarte Paare von Lichtvorhangsäulen 17,17' können zur Erzeugung von Lichtvorhängen eingesetzt werden. Beispielsweise können die zwei auf einer Seite der Schneidemaschine 1 angeordneten Lichtvorhangsäulen 17 zur Ausbildung eines Lichtvorhangs eingesetzt werden, welcher zwischen den zwei Lichtvorhangsäulen 17 verläuft. Der Lichtvorhang kann im ersten Betriebszustand nahtlos bis zur Arbeitsfläche reichen, oder aber einen Abstand zur Arbeitsfläche aufweisen. Auch zwei auf gegenüberliegenden Seiten der Schneidemaschine 1 befindliche Lichtvorhangsäulen können zur Ausbildung eines zwischen ihnen verlaufenden Lichtvorhangs eingesetzt werden. Zur Ausbildung des Lichtvorhangs können z.B. Laser und Reflektoren verwendet werden, die in bzw. an den Lichtvorhangsäulen 17 angebracht sind. Sollte der Lichtvorhang durchtrennt werden - beispielsweise durch einen Menschen -, kann ein Betrieb der Schneidemaschine 1 unterbrochen werden. Ein Lichtvorhang dient damit als Schutzmechanismus.

Figur 4 zeigt eine Figur 2 entsprechende Ausführungsform, wobei eine Schneidemaschine 1 in einem zweiten Betriebszustand gezeigt wird. Im Unterschied zu Figur 2 sind vier Lichtvorhangsäulen 17,17' sowie Schutzscheiben 16,16' aus den Seitenvolumen, die von den Seitenabdeckungen 15,15' umgeben sind, ausgefahren, wobei je zwei Lichtvorhangsäulen aus jedem Seitenvolumen herausragen, d.h. zwei Lichtvorhangsäulen 17 auf einer Seite der Schneidemaschine 1, und zwei Lichtvorhangsäulen 17' auf einer weiteren Seite der Schneidemaschine 1. Die vier Lichtvorhangsäulen 17,17' sowie die Schutzscheiben 16,16' befinden sich zumindest teilweise oberhalb der Arbeitsflächeebene 24.

Je zwei benachbarte Paare von Lichtvorhangsäulen 17,17' können zur Erzeugung von Lichtvorhängen eingesetzt werden. Beispielsweise können die zwei auf einer Seite der Schneidemaschine 1 angeordneten Lichtvorhangsäulen 17 zur Ausbildung eines Lichtvorhangs eingesetzt werden, welcher zwischen den zwei Lichtvorhangsäulen 17 verläuft. Auch zwei auf gegenüberliegenden Seiten der Schneidemaschine 1 befindliche Lichtvorhangsäulen können zur Ausbildung eines zwischen ihnen verlaufenden Lichtvorhangs eingesetzt werden. Zur Ausbildung des Lichtvorhangs können z. B. Laser und Reflektoren verwendet werden, die in bzw. an den Lichtvorhangsäulen 17 angebracht sind. Sollte der Lichtvorhang durchtrennt werden - beispielsweise durch einen Menschen -, kann ein Betrieb der Schneidemaschine 1 unterbrochen werden. Ein Lichtvorhang dient damit als Schutzmechanismus.

Im in Figur 4 gezeigten zweiten Betriebszustand der Schneidemaschine 1 sind auch Schutzscheiben 16,16' aus dem Seitenvolumen ausgefahren. Die ausgefahrenen Schutzscheiben 16,16' dienen als weiterer Schutzmechanismus und verhindern, dass ein Mensch den Bereich oberhalb der Arbeitsfläche während des Betriebs der Schneidemaschine 1 erreichen kann. Der durch Schutzscheiben 16,16' vermittelte Schutz kann dabei durch eine Vielzahl von Schutzscheiben erzielt werden, wobei eine Vielzahl von Schutzscheiben 16,16' aus jedem der zwei Seitenvolumen herausragen können. Die Vielzahl von aus einem Seitenvolumen herausragenden Schutzscheiben kann jeweils in einer Schutzscheibenebene liegen. In Figur 4 sind beispielhaft auf einer Seite der Schneidemaschine 1 fünf Schutzscheiben 16 dargestellt, und auf einer weiteren Seite ebenfalls fünf Schutzscheiben 16'. Der auf einer Seite der Schneidemaschine 1 erzeugbare Lichtvorhang kann auch in der dieser Seite entsprechenden Schutzscheibenebene liegen.

Die Schutzscheiben 16,16' und die durch die Lichtvorhangsäulen 17,17' erzeugbaren Lichtvorhänge haben eine Schutzscheibenausdehnung 22 bzw. eine Lichtvorhangausdehnung 23 in einer zur Arbeitsflächeebene 24 orthogonalen Richtung. Die Schutzscheibenausdehnung 22 in Figur 4 ist grösser als die Lichtvorhangausdehnung 23.

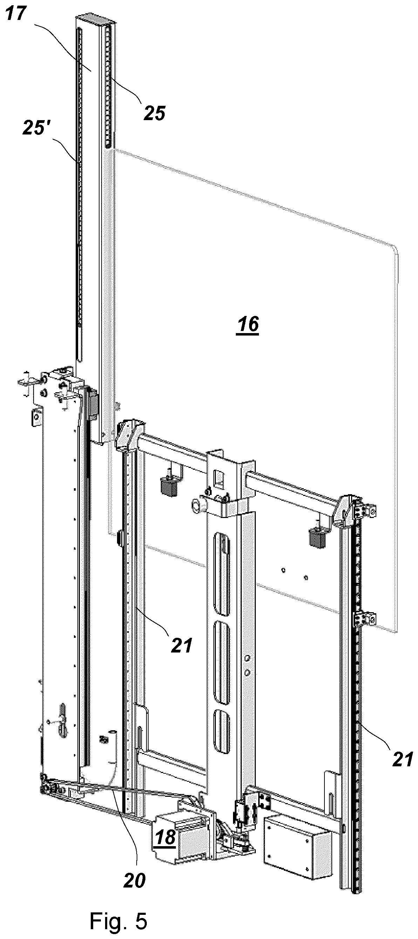

Figur 5 zeigt ein Verfahrmodul 18, welches zum Verfahren einer Lichtvorhangsäule 17 und einer Schutzscheibe 16 ausgebildet ist. Das Verfahrmodul 18 ist Teil eines Hebesystems zum Heben der Schutzscheibe 16 und der Lichtvorhangsäule 17. Das Verfahrmodul kann z.B. als Linearmotor ausgebildet sein. Mittels Führungen 21 kann die Schutzscheibe 16 durch das Verfahrmodul 18 stabil nach oben und unten bewegt werden. Eine Übertragung 20 ermöglicht das gleichzeitige Verfahren von Lichtvorhangsäule 17 und Schutzscheibe 16, wobei die Übertragung 20 unterschiedliche Verfahrgeschwindigkeiten ermöglicht. Alternativ können Schutzscheibe und Lichtvorhangsäule auch unabhängig voneinander verfahren werden (nicht in Figur 5 gezeigt). Die Schutzscheibe 16 ist mittels aufgeklebter Winkel fixiert. Durch einen Längenausgleich des gesamten Hebesystems können auch bei sich ändernden Temperaturverhältnissen seitliche Kräfte auf die Führungen 21 minimiert werden.

Durch unterschiedliche Verfahrgeschwindigkeiten und mehr als einem Antrieb kann z.B. zwischen Beladezustand, erstem Betriebszustand und zweitem Betriebszustand gewechselt werden. Ausgehend vom Beladezustand, in dem sich sowohl die Lichtvorhangsäule 17 als auch die Schutzscheibe 16 unterhalb der Arbeitsflächeebene 24 befinden, kann durch unterschiedliche Verfahrgeschwindigkeiten z.B. die Lichtvorhangsäule 17 schneller herausgefahren werden als die Schutzscheibe 16. Im ersten Betriebszustand wird ein Schutzmechanismus dann z.B. nicht durch die Schutzscheibe 16 erzielt, sondern nur durch die Lichtvorhangsäule 17. Durch weiteres Verfahren kann der zweite Betriebszustand erreicht werden, wobei im zweiten Betriebszustand ein kombinierter Schutzmechanismus vorliegt, der sowohl durch die Schutzscheibe 16 als auch durch die Lichtvorhangsäule 17 bereitgestellt wird.

Die Lichtvorhangsäule 17 und die Schutzscheibe 16 können auch mittels eines Verfahrmoduls 18 unabhängig voneinander verfahren werden (nicht in Figur 5 gezeigt). Auch kann ein Verfahrmodul 18 nur dazu eingesetzt werden, eine Schutzscheibe 16 zu verfahren (ebenfalls nicht in Figur 5 gezeigt). Die Schutzscheibe 16 und die Lichtvorhangsäule 17 können auch pneumatisch verfahren werden (nicht in Figur 5 gezeigt), wobei mit Hilfe einer pneumatischen Kopplung z.B. unterschiedliche Verfahrgeschwindigkeiten von Lichtvorhangsäule 17 und Schutzscheibe 16 erzielt werden können.

Die Lichtvorhangsäule weist eine Lichtvorrichtung 25,25' auf, welche beim Erzeugen des Lichtvorhangs mitwirkt. Die Lichtvorrichtung 25,25' kann beispielsweise Laser und/oder Reflektoren aufweisen. Im Falle der in Figur 5 gezeigten Lichtvorhangsäule 17 weist die Seite der Lichtvorhangsäule 17, die in Richtung der Schutzscheibe 16 zeigt, eine erste Lichtvorrichtung 25 auf, welche im zweiten Betriebszustand einen Lichtvorhang erzeugt, der sich oberhalb der Schutzscheibe befindet und nahtlos bis zur Schutzscheibe 16 reicht. An einer anderen Seite der Lichtvorhangsäule 17 aus Figur 5 befindet sich eine zweite Lichtvorrichtung 25, die im zweiten Betriebszustand einen Lichtvorhang erzeugt, der z.B. nahtlos bis zur Arbeitsfläche 101 der Schneidemaschine 1 reicht.

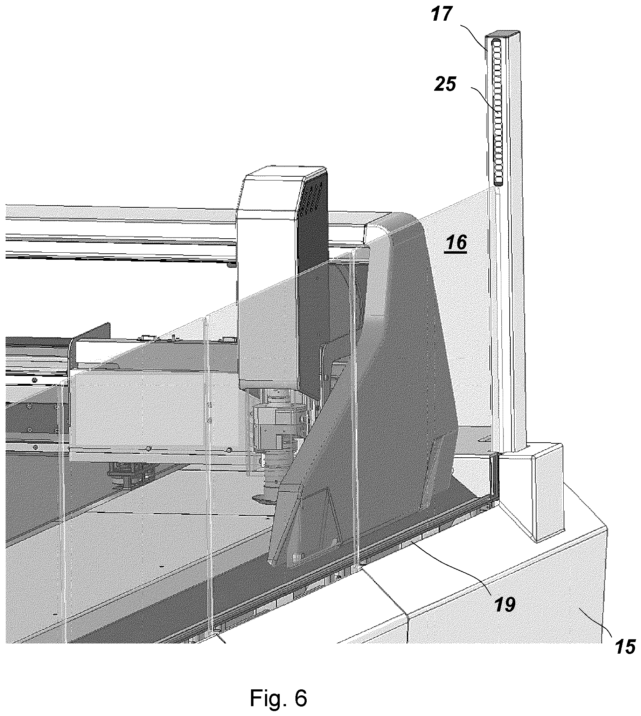

Figur 6 zeigt eine Teilansicht einer Schneidemaschine 1 im zweiten Betriebszustand. Eine Seitenabdeckung 15 ist dabei sichtbar. Durch einen Längsschlitz 19 in der Seitenabdeckung 15 können Schutzscheiben 16 aus dem Seitenvolumen, welches von der Seitenabdeckung 15 umgeben ist, ein- und ausgefahren werden. Der Längsschlitz 19 kann mit Abdeckbürsten und/oder Gummilippen verschlossen sein. Die zur Erzeugung des Lichtvorhangs verwendete Lichtvorrichtung ist in Figur 6 abgebildet. Der erzeugbare Lichtvorhang reicht nahtlos zu den in einer Schutzscheibenebene liegenden Schutzscheiben 16.

## Patentansprüche

1. Eine Schneidemaschine (1), aufweisend
- einen Tisch (10) mit einer ebenen Arbeitsfläche (101), welche in einer Arbeitsflächeebene (24) liegt, die Arbeitsfläche ausgestaltet zur Aufnahme eines zu schneidenden Objekts (102),
- eine Lichtvorhangvorrichtung (17) sowie eine Schutzscheibe (16), wobei die Lichtvorhangvorrichtung (17) zur Erzeugung eines Lichtvorhangs ausgebildet ist,
- einen Querbalken (11), angeordnet oberhalb der Arbeitsfläche, gelagert am Tisch, und ausgestaltet zur linearen Positionierbarkeit parallel zu einer ersten Horizontalachse (H1),
- ein Modul (12), insbesondere zur Aufnahme von Werkzeugen, gelagert am Querbalken und ausgestaltet zur linearen Positionierbarkeit parallel zu einer zweiten Horizontalachse (H2), wobei die zweite Horizontalachse rechtwinklig zur ersten Horizontalachse verläuft, und
- eine Steuerungseinheit (14) ausgebildet zum Steuern der Schneidemaschine (1),
**dadurch gekennzeichnet, dass**
die Schneidemaschine (1) über zwei Betriebszustände verfügt, wobei in einem ersten Betriebszustand die Schutzscheibe (16) an einer Seite des Tisches (10) unterhalb der Arbeitsflächeebene (24) ist, und wobei in einem zweiten Betriebszustand sowohl die Schutzscheibe (16) als auch der von der Lichtvorhangvorrichtung (17) erzeugbare Lichtvorhang an der Seite des Tisches (10) zumindest teilweise oberhalb der Arbeitsflächeebene (24) sind, wobei sich im zweiten Betriebszustand der Lichtvorhang zumindest teilweise oberhalb der Schutzscheibe (16) befindet.

2. Die Schneidemaschine (1) gemäss Anspruch 1,
**dadurch gekennzeichnet, dass**
im ersten Betriebszustand der von der Lichtvorhangvorrichtung (17) erzeugbare Lichtvorhang sich an der Seite des Tisches (10) zumindest teilweise oberhalb der Arbeitsflächeebene (24) befindet.

3. Die Schneidemaschine (1) gemäss Anspruch 1 oder 2,
**dadurch gekennzeichnet, dass**
im ersten Betriebszustand der Lichtvorhang im Wesentlichen nahtlos bis zur Arbeitsflächeebene (24) reicht, und dass im zweiten Betriebszustand der Lichtvorhang im Wesentlichen nahtlos bis zur Schutzscheibe (16) reicht, wobei die Schutzscheibe (16) und der Lichtvorhang in einer zur Arbeitsflächeebene (24) orthogonalen Richtung eine Schutzscheibenausdehnung (22) bzw. eine Lichtvorhangausdehnung (23) aufweisen, wobei die Schutzscheibenausdehnung (22) grösser, insbesondere doppelt so gross, ist als die Lichtvorhangausdehnung (23).

4. Die Schneidemaschine (1) gemäss Anspruch 1, 2 oder 3,
**dadurch gekennzeichnet, dass**
die Lichtvorhangvorrichtung zwei Lichtvorhangsäulen (17) aufweist.

5. Die Schneidemaschine (1) gemäss einem der vorherigen Ansprüche,
**dadurch gekennzeichnet, dass**
die Schneidemaschine (1) eine an der Seite des Tisches (10) angebrachte Seitenabdeckung (15) aufweist, die ein Seitenvolumen umgibt, wobei die Schutzscheibe (16) im ersten Betriebszustand im Seitenvolumen ist.

6. Die Schneidemaschine (1) gemäss einem der vorherigen Ansprüche,
**dadurch gekennzeichnet, dass**
die Schneidemaschine (1) ein Verfahrmodul (18) aufweist, welches insbesondere als Linearmotor oder als Pneumatik-Motor ausgebildet ist und insbesondere im Seitenvolumen angebracht ist, wobei das Verfahrmodul (18) dazu eingerichtet ist, die Lichtvorhangvorrichtung (17) sowie die Schutzscheibe (16) zu verfahren, und wobei die Steuerungseinheit (14) dazu ausgebildet ist, durch Steuerung des Verfahrmoduls (18) die Schneidemaschine (1) in einen der zwei Betriebszustände zu versetzen.

7. Die Schneidemaschine (1) gemäss einem der vorherigen Ansprüche,
**dadurch gekennzeichnet, dass**
die Schneidemaschine (1) über einen Beladezustand verfügt, in dem sowohl die Schutzscheibe (16) als auch die Lichtvorhangvorrichtung (17) unterhalb der Arbeitsflächeebene (24) sind, insbesondere im Seitenvolumen, und dass die Steuerungseinheit (14) dazu ausgebildet ist, durch Steuerung des Verfahrmoduls (18) die Schneidemaschine (1) in den Beladezustand zu versetzen.

8. Die Schneidemaschine (1) gemäss einem der Ansprüche 6 oder 7,
**dadurch gekennzeichnet, dass**
die Steuerungseinheit (14) das Verfahrmodul (18) so steuert, dass die Lichtvorhangvorrichtung (17) und die Schutzscheibe (16) gleichzeitig in einen der zwei Betriebszustände oder in den Beladezustand verfahren werden, und/oder dass die Schutzscheibe (16) und die Lichtvorhangvorrichtung (17) nicht fest verbunden sind, und dass das gleichzeitige Verfahren mit einer Übersetzung (20) erreicht wird.

9. Die Schneidemaschine (1) gemäss einem der Ansprüche 6 oder 7,
**dadurch gekennzeichnet, dass**
die Steuerungseinheit (14) das Verfahrmodul (18) so steuert, dass die Lichtvorhangvorrichtung (17) und die Schutzscheibe (16) unabhängig voneinander in einen der zwei Betriebszustände oder in den Beladezustand verfahren werden.

10. Die Schneidemaschine (1) gemäss Anspruch 1,
**dadurch gekennzeichnet, dass**
die Schneidemaschine (1) einen Rahmen sowie einen ersten und einen zweiten Pneumatik-Motor aufweist, wobei die Lichtvorhangvorrichtung und die Schutzscheibe mit dem Rahmen verbunden sind und wobei der erste Pneumatik-Motor dazu eingerichtet ist, den Rahmen zu verfahren, wobei das Verfahren des Rahmens durch den ersten Pneumatik-Motor ein gemeinsames Verfahren der Lichtvorhangvorrichtung und der Schutzscheibe bewirkt, und wobei der zweite Pneumatik-Motor dazu eingerichtet ist, die Lichtvorhangvorrichtung relativ zum Rahmen zu verfahren, wobei der erste Pneumatik-Motor einen ersten und der zweite Pneumatik-Motor einen zweiten möglichen Verstellweg aufweist, wobei der zweite mögliche Verstellweg insbesondere kürzer ist als der erste mögliche Verstellweg, und dass die Steuerungseinheit (14) dazu eingerichtet ist, den ersten und zweiten Pneumatik-Motor zu steuern.

11. Die Schneidemaschine (1) gemäss einem der vorherigen Ansprüche,
**dadurch gekennzeichnet, dass**
eine Sperrklinke ein Verharren im zweiten Betriebszustand sichert, und dass funktionale Sensorik, insbesondere ein Hall-Sensor und/oder eine Lichtschranke und/oder ein im Verfahrmodul (18) angebrachter Positionszähler, ein Verharren im zweiten Betriebszustand überwacht.

12. Die Schneidemaschine (1) gemäss einem der Ansprüche 6 bis 11,
**dadurch gekennzeichnet, dass**
das Verfahrmodul (18) dazu eingerichtet ist, das Vorhandensein von über die Schwerkraft hinausgehenden Kräften, welche auf die Schutzscheibe (16) wirken, zu erkennen, und dass das Verfahrmodul (18) dazu eingerichtet ist, das Verfahren der Schutzscheibe (16) und/oder der Lichtvorhangvorrichtung (17) im Falle des Überschreitens einer vorgegeben Kraftschwelle durch die über die Schwerkraft hinausgehenden Kräfte zu unterbrechen.

13. Die Schneidemaschine (1) gemäss einem der vorherigen Ansprüche,
**dadurch gekennzeichnet, dass**
das Verfahrmodul (18) dazu eingerichtet ist, die Schutzscheibe (16) durch einen Längsschlitz (19) in der Seitenabdeckung (15) zu verfahren, und dass der Längsschlitz (19) mit Abdeckbürsten und/oder Gummilippen verschlossen ist.

14. Die Schneidemaschine (1) gemäss einem der vorherigen Ansprüche,
**dadurch gekennzeichnet, dass**
die Schneidemaschine (1) eine Vielzahl von Schutzscheiben (16) und von Verfahrmodulen (18) aufweist, wobei die Schutzscheiben (16) in einer Schutzscheibenebene angeordnet sind und mit Führungen (21) beim Verfahren durch die Verfahrmodule (18) in der Schutzscheibenebene gehalten werden, und/oder dass die Steuerungseinheit (14) die Vielzahl von Verfahrmodulen (18) so steuert, dass die Vielzahl von Schutzscheiben (16) gleichzeitig verfahren werden.

15. Die Schneidemaschine (1) gemäss einem der vorherigen Ansprüche,
**dadurch gekennzeichnet, dass**
an einer weiteren Seite des Tisches (10), insbesondere der Seite des Tisches (10) gegenüberliegend, eine weitere Seitenabdeckung (15') angebracht ist, welche ein weiteres Seitenvolumen umgibt, wobei mindestens eine weitere Schutzscheibe (16'), mindestens ein weiteres Verfahrmodul (18) sowie zwei weitere Lichtvorhangsäulen (17') mit der weiteren Seitenabdeckung (15') korrespondieren, wobei die mindestens eine weitere Schutzscheibe (16') und das mindestens eine weitere Verfahrmodul (18) und die zwei weiteren Lichtvorhangsäulen (17') durch die Steuerungseinheit (14) gesteuert werden.

## Claims

1. A cutting machine (1), comprising
- a table (10) having a planar working surface (101) lying in a working surface plane (24), the working surface configured to receive an object (102) to be cut,
- a light curtain device (17) and a protective pane (16), wherein the light curtain device (17) is designed to generate a light curtain,
- a crossbeam (11) arranged above the working surface, mounted on the table, and designed for linear positionability parallel to a first horizontal axis (H 1),
- a module (12), in particular for receiving tools, mounted on the crossbeam and designed for linear positionability parallel to a second horizontal axis (H2), wherein the second horizontal axis extends at right angles to the first horizontal axis, and
- a control unit (14) designed to control the cutting machine (1),
**characterized in that**
the cutting machine (1) has two operating states, wherein in a first operating state the protective pane (16) on one side of the table (10) is below the working surface plane (24), and wherein in a second operating state both the protective pane (16) and the light curtain, which can be generated by the light curtain device (17), on the side of the table (10) are at least partially above the working surface plane (24), wherein in the second operating state the light curtain is at least partially above the protective pane (16).

2. The cutting machine (1) according to claim 1, **characterized in that** in the first operating state the light curtain that can be generated by the light curtain device (17) is located on the side of the table (10) at least partially above the working surface plane (24).

3. The cutting machine (1) according to claim 1 or 2, **characterized in that** in the first operating state the light curtain extends substantially seamlessly as far as the working surface plane (24), and **in that** in the second operating state the light curtain extends substantially seamlessly as far as the protective pane (16), wherein the protective pane (16) and the light curtain comprise, in a direction orthogonal to the working surface plane (24), a protective pane extension (22) and a light curtain extension (23) respectively, wherein the protective pane extension (22) is greater than the light curtain extension (23), in particular twice as great as the light curtain extension (23).

4. The cutting machine (1) according to claim 1, 2 or 3, **characterized in that** the light curtain device comprises two light curtain columns (17).

5. The cutting machine (1) according to one of the preceding claims,
**characterized in that** the cutting machine (1) comprises a side cover (15) attached to the side of the table (10) and surrounding a side volume, wherein the protective pane (16) is in the side volume in the first operating state.

6. The cutting machine (1) according to one of the preceding claims,
**characterized in that** the cutting machine (1) has a traversing module (18), which is designed in particular as a linear motor or as a pneumatic motor and is mounted in particular in the side volume, wherein the traversing module (18) is set up to traverse the light curtain device (17) and the protective pane (16), and wherein the control unit (14) is designed to set the cutting machine (1) in one of the two operating states by controlling the traversing module (18).

7. The cutting machine (1) according to one of the preceding claims,
**characterized in that** the cutting machine (1) has a loading state in which both the protective pane (16) and the light curtain device (17) are below the working surface plane (24), in particular in the side volume, and **in that** the control unit (14) is designed to set the cutting machine (1) in the loading state by controlling the traversing module (18).

8. The cutting machine (1) according to one of claims 6 or 7, **characterized in that** the control unit (14) controls the traversing module (18) so that the light curtain device (17) and the protective pane (16) are simultaneously traversed to one of the two operating states or to the loading state, and/or that the protective pane (16) and the light curtain device (17) are not fixedly connected, and **in that** the simultaneous traversing is achieved with a transmission (20).

9. The cutting machine (1) according to one of claims 6 or 7, **characterized in that** the control unit (14) controls the traversing module (18) in such a way that the light curtain device (17) and the protective pane (16) are traversed independently of each other into one of the two operating states or into the loading state.

10. The cutting machine (1) according to claim 1, **characterized in that** the cutting machine (1) comprises a frame and a first and a second pneumatic motor, wherein the light curtain device and the protective pane are connected to the frame and wherein the first pneumatic motor is arranged to move the frame, wherein the movement of the frame by the first pneumatic motor causes a joint movement of the light curtain device and the protective pane, and wherein the second pneumatic motor is adapted to move the light curtain device relative to the frame, wherein the first pneumatic motor has a first possible displacement path and the second pneumatic motor has a second possible displacement path, wherein the second possible displacement path is in particular shorter than the first possible displacement path, and **in that** the control unit (14) is adapted to control the first and second pneumatic motors.

11. The cutting machine (1) according to one of the preceding claims,
**characterized in that** a locking pawl ensures a persistence in the second operating state, and **in that** functional sensor technology, in particular a Hall sensor and/or a light barrier and/or a position counter mounted in the traversing module (18), monitors a persistence in the second operating state.

12. The cutting machine (1) according to one of claims 6 to 11, **characterized in that** the traversing module (18) is adapted to detect the presence of forces exceeding the force of gravity acting on the protective pane (16), and **in that** the traversing module (18) is adapted to interrupt the traversing of the protective pane (16) and/or of the light curtain device (17) in the event that a predetermined force threshold is exceeded by the forces exceeding the force of gravity.

13. The cutting machine (1) according to one of the preceding claims,
**characterized in that** the traversing module (18) is adapted to traverse the protective pane (16) through a longitudinal slot (19) in the side cover (15), and **in that** the longitudinal slot (19) is closed with cover brushes and/or rubber lips.

14. The cutting machine (1) according to one of the preceding claims,
**characterized in that** the cutting machine (1) comprises a plurality of protective panes (16) and of traversing modules (18), wherein the protective panes (16) are arranged in a protective pane plane and are held in the protective pane plane by guides (21) during traversing by the traversing modules (18), and/or **in that** the control unit (14) controls the plurality of traversing modules (18) such that the plurality of protective panes (16) are traversed simultaneously.

15. The cutting machine (1) according to one of the preceding claims,
**characterized in that** on a further side of the table (10), in particular opposite to the side of the table (10), a further side cover (15') is mounted, which surrounds a further side volume, wherein at least one further protective pane (16'), at least one further traversing module (18) and two further light curtain columns (17') correspond to the further side cover (15'), wherein the at least one further protective pane (16') and the at least one further traversing module (18) and the two further light curtain columns (17') are controlled by the control unit (14).

## Revendications

1. Machine à découper (1), présentant
- une table (10) avec une surface de travail plane (101) qui se situe dans un plan de surface de travail (24), la surface de travail étant conçue pour recevoir un objet à découper (102),
- un dispositif de barrière immatérielle (17) ainsi qu'une vitre de protection (16), le dispositif de barrière immatérielle (17) étant conçu pour générer une barrière immatérielle,
- une barre transversale (11), disposée au-dessus de la surface de travail, montée sur la table et conçue pour pouvoir être positionnée de manière linéaire parallèlement à un premier axe horizontal (H1),
- un module (12), en particulier destiné à recevoir des outils, monté sur la barre transversale et conçu pour pouvoir être positionné de manière linéaire parallèlement à un deuxième axe horizontal (H2), le deuxième axe horizontal étant perpendiculaire au premier axe horizontal, et
- une unité de commande (14) conçue pour commander la machine à découper (1),
**caractérisée en ce que**
la machine à découper (1) dispose de deux états de fonctionnement, où, dans un premier état de fonctionnement, la vitre de protection (16) se trouve sur un côté de la table (10) en dessous du plan de surface de travail (24), et où, dans un deuxième état de fonctionnement, aussi bien la vitre de protection (16) que la barrière immatérielle pouvant être générée par le dispositif de barrière immatérielle (17) se trouvent sur le côté de la table (10) au moins partiellement au-dessus du plan de surface de travail (24), la barrière immatérielle se trouvant au moins partiellement au-dessus de la vitre de protection (16) dans le deuxième état de fonctionnement.

2. Machine à découper (1) selon la revendication 1,
**caractérisée en ce que**,
dans le premier état de fonctionnement, la barrière immatérielle pouvant être générée par le dispositif de barrière immatérielle (17) se trouve sur le côté de la table (10) au moins partiellement au-dessus du plan de surface de travail (24).

3. Machine à découper (1) selon la revendication 1 ou 2,
**caractérisée en ce que**,
dans le premier état de fonctionnement, la barrière immatérielle s'étend de manière sensiblement continue jusqu'au plan de surface de travail (24), et **en ce que**, dans le deuxième état de fonctionnement, la barrière immatérielle s'étend de manière sensiblement continue jusqu'à la vitre de protection (16), la vitre de protection (16) et la barrière immatérielle présentant, dans une direction orthogonale au plan de surface de travail (24), une extension de vitre de protection (22) ou une extension de barrière immatérielle (23), l'extension de vitre de protection (22) étant plus grande, en particulier deux fois plus grande, que l'extension de barrière immatérielle (23).

4. Machine à découper (1) selon la revendication 1, 2 ou 3,
**caractérisée en ce que**
le dispositif de barrière immatérielle présente deux colonnes de barrière immatérielle (17).

5. Machine à découper (1) selon l'une des revendications précédentes,
**caractérisée en ce que**
la machine à découper (1) présente un capot latéral (15) monté sur le côté de la table (10) et entourant un volume latéral, la vitre de protection (16) étant dans le volume latéral dans le premier état de fonctionnement.

6. Machine à découper (1) selon l'une des revendications précédentes,
**caractérisée en ce que**
la machine à découper (1) présente un module de déplacement (18), qui est en particulier réalisé sous la forme d'un moteur linéaire ou un moteur pneumatique et est en particulier monté dans le volume latéral, le module de déplacement (18) étant conçu pour déplacer le dispositif de barrière immatérielle (17) ainsi que la vitre de protection (16), et l'unité de commande (14) étant conçue pour mettre la machine à découper (1) dans l'un des deux états de fonctionnement en commandant le module de déplacement (18).

7. Machine à découper (1) selon l'une des revendications précédentes,
**caractérisée en ce que**
la machine à découper (1) dispose d'un état de chargement dans lequel à la fois la vitre de protection (16) et le dispositif de barrière immatérielle (17) se trouvent en dessous du plan de surface de travail (24), en particulier dans le volume latéral, et **en ce que** l'unité de commande (14) est conçue pour mettre la machine à découper (1) dans l'état de chargement en commandant le module de déplacement (18).

8. Machine à découper (1) selon l'une des revendications 6 ou 7,
**caractérisée en ce que**
l'unité de commande (14) commande le module de déplacement (18) de manière à déplacer simultanément le dispositif de barrière immatérielle (17) et la vitre de protection (16) dans l'un des deux états de fonctionnement ou dans l'état de chargement, et/ou **en ce que** la vitre de protection (16) et le dispositif de barrière immatérielle (17) ne sont pas solidaires et **en ce que** le déplacement simultané est obtenu avec un rapport de transmission (20).

9. Machine à découper (1) selon l'une des revendications 6 ou 7,
**caractérisée en ce que**
l'unité de commande (14) commande le module de déplacement (18) de manière à ce que le dispositif de barrière immatérielle (17) et la vitre de protection (16) soient déplacés indépendamment l'un de l'autre dans l'un des deux états de fonctionnement ou dans l'état de chargement.

10. Machine à découper (1) selon la revendication 1,
**caractérisée en ce que**
la machine à découper (1) présente un cadre ainsi qu'un premier et un deuxième moteur pneumatique, le dispositif de barrière immatérielle et la vitre de protection étant reliés au cadre et le premier moteur pneumatique étant conçu pour déplacer le cadre, le déplacement du cadre par le premier moteur pneumatique provoquant un déplacement commun du dispositif de barrière immatérielle et de la vitre de protection, et le deuxième moteur pneumatique étant conçu pour déplacer le dispositif de barrière immatérielle par rapport au cadre, le premier moteur pneumatique présentant une première course de réglage possible et le deuxième moteur pneumatique une deuxième course de réglage possible, la deuxième course de réglage possible étant en particulier plus courte que la première course de réglage possible, et **en ce que** l'unité de commande (14) est conçue pour commander le premier et le deuxième moteur pneumatique.

11. Machine à découper (1) selon l'une des revendications précédentes,
**caractérisée en ce que**
un cliquet d'arrêt assure un maintien dans le deuxième état de fonctionnement, et **en ce que** des capteurs fonctionnels, en particulier un capteur à effet Hall et/ou une barrière lumineuse et/ou un compteur de position monté dans le module de déplacement (18), surveillent un maintien dans le deuxième état de fonctionnement.

12. Machine à découper (1) selon l'une des revendications 6 à 11,
**caractérisée en ce que**
le module de déplacement (18) est conçu pour détecter la présence de forces supérieures à la gravité s'exerçant sur la vitre de protection (16), et **en ce que** le module de déplacement (18) est conçu pour interrompre le déplacement de la vitre de protection (16) et/ou du dispositif de barrière immatérielle (17) en cas de dépassement d'un seuil de force prédéfini par les forces supérieures à la gravité.

13. Machine à découper (1) selon l'une des revendications précédentes,
**caractérisée en ce que**
le module de déplacement (18) est conçu pour déplacer la vitre de protection (16) à travers une fente longitudinale (19) dans le capot latéral (15), et **en ce que** la fente longitudinale (19) est fermée par des brosses de recouvrement et/ou des lèvres en caoutchouc.

14. Machine à découper (1) selon l'une des revendications précédentes,
**caractérisée en ce que**
la machine à découper (1) présente une pluralité de vitres de protection (16) et de modules de déplacement (18), les vitres de protection (16) étant disposés dans un plan de vitres de protection et étant maintenues dans le plan de vitres de protection par des guides (21) lors du déplacement par les modules de déplacement (18), et/ou **en ce que** l'unité de commande (14) commande la pluralité de modules de déplacement (18) de manière à ce que la pluralité de vitres de protection (16) soient déplacées simultanément.

15. Machine à découper (1) selon l'une des revendications précédentes,
**caractérisée en ce que**
sur un autre côté de la table (10), en particulier en face du côté de la table (10), est monté un autre capot latéral (15') qui entoure un autre volume latéral, au moins une autre vitre de protection (16'), au moins un autre module de déplacement (18) ainsi que deux autres colonnes de barrière immatérielle (17') correspondant à l'autre capot latéral (15'), ladite au moins une autre vitre de protection (16'), ledit au moins un autre module de déplacement (18) et les deux autres colonnes de barrière immatérielle (17') étant commandés par l'unité de commande (14).
